# EUROPÄISCHE PATENTSCHRIFT

(11) **EP 1 442 905 B1**
(45) Veröffentlichungstag und Bekanntmachung des Hinweises auf die Patenterteilung: **18.02.2009**
(21) Anmeldenummer: 03027302.3
(22) Anmeldetag: 26.11.2003
(51) Int. Cl.: B60H 1/22, F01N 1/08, F01N 1/10

(54) **Schalldämpfer für ein Heizgerät, insbesondere Fahrzeugheizgerät**
Silencer for a heater, in particular for a vehicle heating device
Silencieux pour appareil de chauffage, notamment pour un dispositif de chauffage pour un véhicule

(30) Priorität: 31.01.2003 DE 10303947
(43) Veröffentlichungstag der Anmeldung: 04.08.2004
(73) Patentinhaber: J. Eberspächer GmbH & Co. KG, 73730 Esslingen (DE)
(72) Erfinder: Dreiocker, Rene, 73779 Deizisau (DE); Herrmann, Jesko, 72660 Beuren (DE); Collmer, Andreas, 73760 Ostfildern (DE)
(74) Vertreter: Ruttensperger, Bernhard

(56) Entgegenhaltungen:
- EP-A1- 0 243 559
- CH-A- 299 831
- FR-A1- 2 678 681
- GB-A- 2 109 855
- JP-A- 58 133 412
- US-A- 2 904 125
- US-A- 3 327 809
- US-A- 3 960 509
- US-A- 4 589 517

## Beschreibung

Die vorliegende Erfindung betrifft einen Schalldämpfer für ein Heizgerät, insbesondere ein Fahrzeugheizgerät, gemäß dem Oberbegriff des Anspruchs 1 und dem Oberbegriff des Anspruchs 7.

In Fahrzeugen werden zunehmend brennstoffbetriebene Heizgeräte als zusätzliche Wärmequellen eingesetzt. Dies betrifft sowohl den Einsatz als so genannte Standheizungen, als auch insbesondere in Verbindung mit Dieselantriebsaggregaten so genannte Zuheizer. Derartige Heizgeräte werden in verschiedenen Phasen betrieben. So wird im Betrieb als Standheizung das Antriebsaggregat eines Fahrzeugs, im Allgemeinen also eine Brennkraftmaschine, nicht aktiviert sein, so dass in dieser Phase das Heizgerät bzw. die Standheizung die wesentliche Geräuschquelle am Fahrzeug sein wird. Beim Betrieb als Zuheizer arbeitet ein derartiges Heizgerät dann, wenn auch das Antriebsaggregat in Betrieb ist, so dass das Heizgerät bzw. der Zuheizer eine zusätzliche Geräuschquelle bildet. In beiden vorangehend beschriebenen Betriebszuständen ist es erstrebenswert, die im Bereich eines derartigen zusätzlichen Heizgeräts erzeugten und in die Umgebung abgegebenen Geräusche zur Erhöhung des Komforts der Fahrzeuginsaßen, jedoch auch zur Minderung der Geräuschbelästigung der Fahrzeugumgebung so gering als möglich zu halten.

Ein Schalldämpfer gemäß dem Oberbegriff des Anspruchs 1 ist aus der US-A-4 589 517 bekannt. Bei diesem bekannten Schalldämpfer ist ein rohrartiger Eintrittsbereich von Schallabsorptionsmaterial umgeben. Der rohrartige Eintrittsbereich weist eine Vielzahl von Öffnungen auf, durch welche er zu dem Schallabsorptionsmaterial offen ist. Eine das Schallabsorptionsmaterial umgebende Ummantelung ist ebenfalls mit einer Mehrzahl von Öffnungen versehen.

Die JP 58 133412 A offenbart einen Schalldämpfer, bei welchem ein Austrittsrohr mit einer Vielzahl von Öffnungen ausgebildet ist. In diesem Bereich ist das Ausgangsrohr von Schallabsorptionsmaterial umgeben, welches wiederum von einer mit einer Vielzahl von Öffnungen ausgebildeten Ummantelung umgeben ist.

Die US-A-2 904 125 offenbart einen Schalldämpfer, bei welchem ein Schalldämpferrohr von Schall absorbierendem Material umgeben ist. Das Rohr weist eine Vielzahl von Öffnungen zu dem dieses umgebenden Schall absorbierenden Material auf. Eine Ummantelung umgibt das Schall absorbierende Material und weist ebenfalls eine Vielzahl von Öffnungen auf.

Ein Schalldämpfer gemäß dem Oberbegriff des Anspruchs 7 ist aus der EP-A1-0 243 559 bekannt. Bei diesem bekannten Schalldämpfer sind in einem Gehäuse drei zueinander koaxiale Strömungsraumbereiche gebildet, die bezüglich einander durch jeweilige Strömungsführungselemente getrennt sind. Im Übergangsbereich von einem radial äußersten ersten Strömungsraumbereich zu einem radial mittleren zweiten Strömungsraumbereich werden die strömenden Gase um etwa 180° umgelenkt. Im Übergang vom radial mittleren zweiten Strömungsraumbereich zu einem radial inneren und zu einem Austrittsende führenden dritten Strömungsraumbereich findet erneut eine Umlenkung um etwa 180° statt.

Die FR-A1-2 678 681 offenbart einen Schalldämpfer, bei welchem ein Schalldämpfergehäuse an seiner Innenseite mit Schall absorbierendem Material ausgekleidet ist.

Die GB-A-2 109 855 offenbart einen Schalldämpfer mit einem Eintrittsrohr, einem Austrittsrohr und einem Verbindungsrohr. Diese drei Rohre liegen zumindest bereichsweise nebeneinander. Die über das Eintrittsrohr einströmenden Gase werden in einem Gehäuse umgelenkt in das Verbindungsrohr, strömen durch dieses zunächst wieder zurück und werden erneut umgelenkt, um dann in das Austrittsrohr einzutreten.

Es ist die Aufgabe der vorliegenden Erfindung, einen Schalldämpfer für ein Heizgerät, insbesondere Fahrzeugheizgerät, vorzusehen, mit welchem die in einem derartigen Heizgerät bei Verbrennung erzeugten Geräusche effizient gemindert werden können.

Gemäß der vorliegenden Erfindung wird diese Aufgabe gelöst durch einen Schalldämpfer für ein Heizgerät, insbesondere Fahrzeugheizgerät, gemäß Anspruch 1. Der Schalldämpfer umfasst einen rohrartigen Eintrittsbereich, eine den rohrartigen Eintrittsbereich wenigstens bereichsweise umgebende Schallabsorptionsmaterialanordnung, eine die Schallabsorptionsmaterialanordnung umgebende rohrartige Ummantelung, wobei in dem rohrartigen Eintrittsbereich und in der rohrartigen Ummantelung jeweils zur Schallabsorptionsmaterialanordnung hin offene Öffnungen vorgesehen sind.

Durch den bei der erfindungsgemäßen Anordnung vorgesehenen koaxialen bzw. in ringartiger Weise sandwichartigen Aufbau wird eine sehr effiziente Minderung der vor allem auch über die Verbrennungsabgase transportierten Geräusche erlangt. Durch das Ineinanderschachteln verschiedener Bauteile bzw. Baugruppen werden vielzählige Reflexionsstellen geschaffen, die auch bei vergleichsweise wenig beanspruchtem Bauraum zu einer sehr effizienten Minderung des abgegebenen Schalls sorgen. Durch das Vorsehen von Absorptionsmaterial und durch das Vorsehen von zu diesem jeweils offenen Öffnungen nutzt die erfindungsgemäße Anordnung neben der vorangehend bereits angesprochenen Reflexion auch die Absorption und die Interferenz, um die Schallemission zu mindern.

Um bei der erfindungsgemäßen Ausgestaltung eines Schalldämpfers bei kompakter Bauweise für eine geeignete Strömungsführung der Verbrennungsabgase sorgen zu können, ist eine Gehäuseanordnung vorgesehen, welche die Ummantelung zum Bilden eines Verbrennungsabgasrückströmungsraumes umgibt und in welche in einem Eintrittsende Verbrennungsabgase über den Eintrittsbereich eingeleitet werden, durch den Eintrittsbereich hindurch in Richtung zu einem Umlenkbereich geleitet werden, an welchem die Verbrennungsabgase zum Zurückströmen durch den Verbrennungsabgasrückströmungsraum vorzugsweise in Richtung zu einem Abgasaustritt umgelenkt werden. Insbesondere die Umlenkung der Verbrennungsabgase um einen Winkel von beispielsweise 180° hat zur Folge, dass in entsprechender Weise eine Reflexion der Schallwellen im Schalldämpfer auftritt, so dass bei dem derart ausgestalteten Schalldämpfer in besonders effizienter Art und Weise der Aspekt der Schallabsorption mit dem Aspekt der Schallreflexion kombiniert ist.

Beispielsweise kann bei dem erfindungsgemäßen Schalldämpfer vorgesehen sein, dass die Öffnungen in dem Eintrittsbereich und die Öffnungen in der Ummantelung wenigstens zum Teil in in einer Strömungsrichtung zueinander versetzten Abschnitten des Eintrittsbereichs und der Ummantelung vorgesehen sind. Gemäß einer weiteren insbesondere hinsichtlich der Verstärkung des Interferenzeffekts besonders vorteilhaften Ausgestaltungsform kann vorgesehen sein, dass die Öffnungen in dem Eintrittsbereich und die Öffnungen in der Ummantelung wenigstens zum Teil in in einer Strömungsrichtung einander überlappenden Abschnitten des Eintrittsbereichs und der Ummantelung vorgesehen sind.

Bei einer weiteren bevorzugten Ausgestaltungsform kann vorgesehen sein, dass die Absorptionsmaterialanordnung ein rohrartiges Trennelement umfasst und dass in einem zwischen dem Trennelement und dem Eintrittsbereich gebildeten ersten Absorptionsraum und in einem zwischen dem Trennelement und der Ummantelung gebildeten zweiten Absorptionsraum Absorptionsmaterial angeordnet ist. Bei einer derartigen Anordnung kann vor allem der Effekt der Schallreflexion dadurch verstärkt werden, dass der erste Absorptionsraum oder/und der zweite Absorptionsraum an wenigstens einem Endbereich abgeschlossen ist.

Eine vor allem hinsichtlich des in einem Fahrzeug bereitzuhaltenden Bauraums vorteilhafte Variante sieht dabei vor, dass der Abgasaustritt am Eintrittsende der Gehäuseanordnung vorgesehen ist.

Gemäß einem weiteren Aspekt wird die Aufgabegelöst durch einen Schalldämpfer für ein Heizgerät, insbesondere Fahrzeugheizgerät, gemäß Anspruch 7. Der Schalldämpfer umfasst eine weingstens bereichsweise mit einer Schallabsorptionsmaterialanordnung ausgekleidete Gehäuseanordnung mit einem Eintrittsbereich an einem Eintrittsende und einem Austrittsbereich an einem Austrittsende, einen ersten Strömungsraumbereich, welcher vom Eintrittsbereich zu einem ersten Umlenkbereich führt, in welchem eine Strömungsumlenkung in einen zweiten Strömungsraumbereich erfolgt, wobei der zweite Strömungsraumbereich in Richtung zum Eintrittsbereich zurück zu einem zweiten Umlenkbereich führt, wobei im zweiten Umlenkbereich eine Strömungsumlenkung in einen dritten Strömungsraumbereich erfolgt, welcher in Richtung zum Austrittsbereich führt.

Auch bei einem derart aufgebauten Schalldämpfer werden die verschiedenen Schalldämpfungsmechanismen Absorption, Reflexion und Interferenz in sehr effizienter Art und Weise kombiniert.

Dabei ist ferner vorgesehen, dass der erste Strömungsraumbereich, der zweite Strömungsraumbereich und der dritte Strömungsraumbereich ineinander geschachtelt sind, wodurch sich eine sehr kompakte Bauweise ergibt.

Der erste und der zweite Strömungsraumbereich sowie der zweite und der dritte Strömungsraumbereich sind durch ein jeweiliges Strömungsführungselement voneinander getrennt, wobei zum Bereitstellen einer sehr effizienten Schalldämpfungswirkung durch Absorption wenigstens eines der Strömungsführungselementeeine Schallabsorptionsmaterialanordnung aufweisen kann. Ferner sind in wenigstens einem der Strömungsführungselemente Öffnungen vorgesehen, um den Reflexionsaspekt der Schalldämpfung weiter zu verstärken.

Die die Gehäuseanordnung wenigstens teilweise auskleidende Schallabsorptionsmaterialanordnung kann durch ein Trennelement bedecktes Absorptionsmaterial umfassen, wobei in dem Trennelement zum Absorptionsmaterial hin offene Öffnungen vorgesehen sind, um eine verbesserte Absorptionswirkung erlangen zu können.

Die vorliegende Erfindung wird nachfolgend mit Bezug auf die beiliegenden Zeichnungen detailliert beschrieben. Es zeigt:
- Fig. 1: eine Längsschnittansicht eines erfindungsgemäßen Schalldämpfers;
- Fig. 2: eine Längsschnittansicht einer abgewandelten Ausgestaltungsform;
- Fig. 3: eine Längsschnittansicht einer weiteren alternativen Ausgestaltungsform eines erfindungsgemäßen Schalldämpfers.

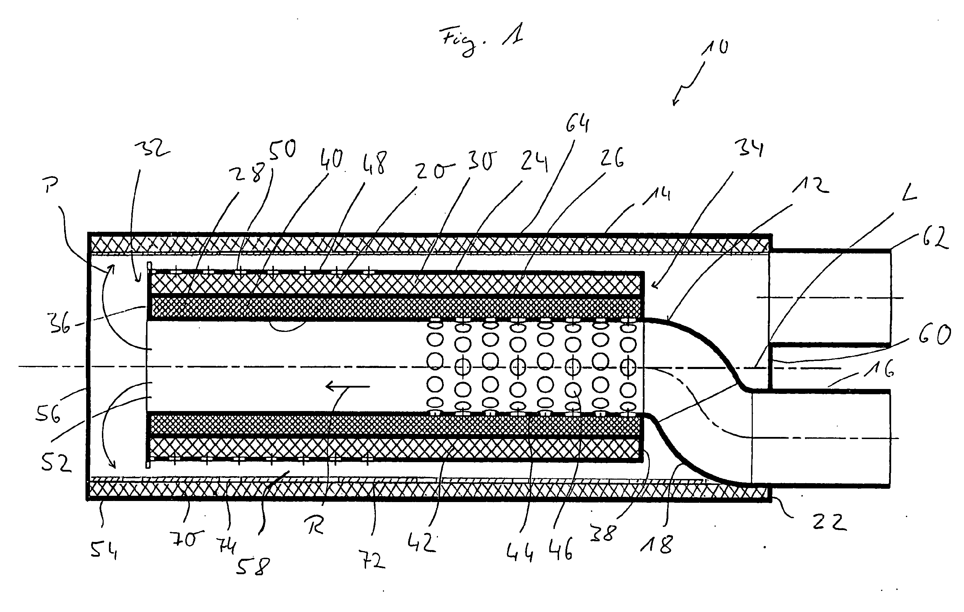

In Fig. 1 ist ein erfindungsgemäßer Schalldämpfer mit 10 bezeichnet. Der Schalldämpfer 10 umfasst ein Eintrittsrohr 12, das im Wesentlichen in drei Bereiche aufgegliedert werden kann. Zum einen ist dies ein durch ein Gehäuse 14 hindurchführender Eintrittsstutzen 16, ein im Wesentlichen S-artig geschwungener Übergangsbereich 18 und ein im Wesentlichen geradlinig sich erstreckender Absorptionsabschnitt 20. Durch den Übergangsbereich 18 wird der zu einer Längsmittelachse L des Gehäuses 14 vorhandene Versatz des an einem Eintrittsende 22 des Gehäuses 14 vorgesehenen Eintrittsstutzens 16 kompensiert, so dass der Absorptionsabschnitt 20 des Eintrittsrohrs 12 näherungsweise konzentrisch zur Achse L liegt. Es ist selbstverständlich, dass das Eintrittsrohr 12 einteilig ausgebildet sein kann oder aber aus mehreren Segmenten zusammengefügt sein kann.

In seinem Absorptionsabschnitt 20 ist das Eintrittsrohr 12 von einer rohrartigen Ummantelung 24 umgeben, die vorzugsweise ebenfalls koaxial zur Achse L angeordnet ist. Zwischen der Ummantelung 24 und dem Absorptionsabschnitt 20 des Eintrittsrohrs 12 ist ein rohrartiges Trennelement 26 angeordnet, das ebenfalls vorzugsweise koaxial zur Achse L liegt. Ein zwischen dem Trennelement 26 und dem Absorptionsabschnitt 20 des Eintrittsrohrs 12 gebildeter erster Absorptionsraum 28 und ein zwischen dem Trennelement 26 und der Ummantelung 24 gebildeter zweiter Absorptionsraum 30 sind an beiden Endbereichen 32, 34 derselben bzw. des Absorptionsabschnitts 20, der Ummantelung 24 und des Trennelements 26 durch ringscheibenartige Abschlusselemente 36, 38 abgeschlossen. In beiden Absorptionsräumen 28, 30 ist jeweils Absorptionsmaterial 40, 42 angeordnet. Weiterhin ist in einem in der Strömungsrichtung R der das Eintrittsrohr 12 durchströmenden Verbrennungsabgase stromaufwärtigen Abschnitt 44 des Absorptionsabschnitts 20 des Eintrittsrohrs 12 eine Mehrzahl von zum ersten Absorptionsraum 28 und somit dem darin angeordneten Absorptionsmaterial 40 offenen Öffnungen 46 vorgesehen. In entsprechender Weise sind in einem in der Strömungsrichtung R stromabwärts gelegenen Abschnitt 48 der Ummantelung 24 mehrere Öffnungen 50 vorgesehen, die zum zweiten Absorptionsraum 30 und somit dem darin vorgesehenen Absorptionsmaterial 42 offen sind. Die beiden Abschnitte 44, 48 des Absorptionsabschnitts 20 bzw. der Ummantelung 24 liegen zueinander versetzt, so dass senkrecht zur Strömungsrichtung R kein Bereich vorhanden ist, in welchem Öffnungen 48 und Öffnungen 50 vorhanden sind.

Das Eintrittsrohr 12 bzw. der Absorptionsabschnitt 20 desselben ist an oder nahe dem Endbereich 32 offen. Dieser Öffnung 52 des Eintrittsrohrs 12, die nahe einem Umlenkende 54 des Gehäuses 14 liegt, liegt ein Bodenbereich 56 des Gehäuses 14 gegenüber, so dass die das Eintrittsrohr 12 im Bereich der Öffnung 52 in der Strömungsrichtung R verlassenden Verbrennungsabgase an diesem Bodenbereich 56 - bezogen auf die Längsachse L - nach radial außen umgelenkt werden, wie durch die Pfeile P angedeutet. Die Verbrennungsabgase strömen dann an der Außenseite der Ummantelung 24 in einem zwischen der Ummantelung 24 und dem Gehäuse 14 gebildeten Rückströmraum 58 zurück in Richtung zum Eintrittsende 22, wo in einem weiteren Bodenbereich 60 des Gehäuses 14 ein Austrittsstutzen 62 vorgesehen ist. Vorzugsweise liegt dieser Austrittsstutzen 62 - wiederum bezogen auf die Längsmittenachse L des Gehäuses 14 - exzentrisch und symmetrisch hinsichtlich der Anordnung des Eintrittsstutzens 16.

Durch den vorangehend beschriebenen Aufbau eines Schalldämpfers 10 für ein Fahrzeugheizgerät wird ein sehr kompakter Aufbau geschaffen, bei dem aufgrund der Tatsache, dass der Eintritt und der Austritt der Verbrennungsabgase am Gehäuse am gleichen Endbereich 22 vorgesehen sind, eine hinsichtlich des Einbaus in ein Fahrzeug günstige, weil platzsparende Anordnung geschaffen wird. Ferner wird durch die insbesondere im Bereich des Absorptionsabschnitts 20 des Eintrittsrohrs 12 geschaffene Anordnung mit den beiden Lagen aus Absorptionsmaterial 40, 42 und den in der Strömungsrichtung R zueinander versetzten Öffnungen 46, 50 im Absorptionsabschnitt 20 einerseits und der Ummantelung 24 andererseits für ein sehr gutes Schalldämmungsverhalten gesorgt. Hier werden sowohl die Absorption als auch die Reflexion als auch unter Ausnutzung der Reflexion die Interferenzeffekte genutzt, um einen Beitrag zur Schalldämmung zu liefern. Vor allem sorgt die Ineinanderschachtelung verschiedener rohrartiger Bauteile und das Bilden verschiedener Raumbereiche, die wiederum durch Abschlusselemente 36, 38 abgeschlossen sind, dafür, dass im Bereich der in Richtung der Längsachse L langgestreckten Absorptionsräume 28, 30 eine Vielzahl an Reflexionsstellen vorhanden ist.

Wie vorangehend beschrieben, ist es vor allem auch aufgrund des dadurch erhaltbaren sehr kompakten Aufbaus bevorzugt, die verschiedenen rohrartigen Bauteile, also das Eintrittsrohr 12 in seinem Absorptionsabschnitt 20, das Trennelement 26, die Ummantelung 24 und den die Ummantelung 24 umgebenden Außenmantel 64 des Gehäuses 14 zueinander bzw. zur Längsachse L koaxial anzuordnen, wobei hier beispielsweise eine kreisrunde Formgebung dieser verschiedenen rohrartigen Bauteile vorhanden sein kann, aber nicht notwendigerweise vorhanden sein muss. Selbstverständlich kann auch eine abgeflachte Ausgestaltung hier realisiert sein.

Wie in Fig. 1 weiter erkennbar, kann bei der in Fig. 1 vorgesehenen Ausgestaltungsform, selbstverständlich jedoch auch bei der nachfolgend noch zu beschreibenden Ausgestaltungsform, vorgesehen sein, dass die Innenoberfläche des Gehäuses 14 ebenfalls mit Absorptionsmaterial 70 ausgekleidet ist, wodurch die gesamt zur Verfügung stehende absorbierende Oberfläche noch weiter erhöht werden kann. Selbstverständlich kann auch der Bodenbereich 56 mit derartigem Material bedeckt sein. Das Absorptionsmaterial kann an seiner vom Gehäuse 14 abgewandten Innenseite von einer Verkleidung 72 bedeckt sein, die Öffnungen 74 aufweist, um auch hier eine möglichst effiziente Absorptionswirkung erhalten zu können.

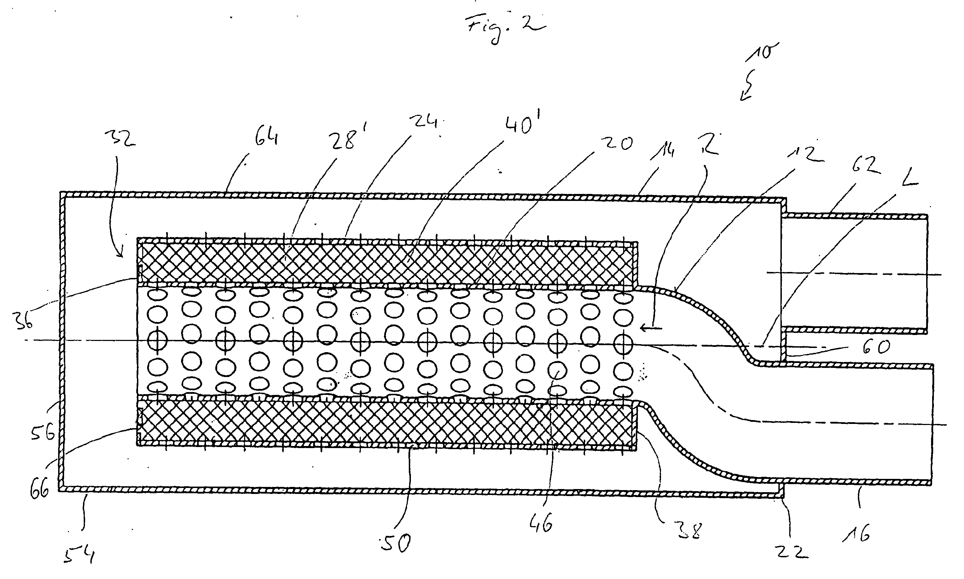

Eine Abwandlung der vorangehend beschriebenen Ausgestaltungsform ist in Fig. 2 gezeigt. Es wird nachfolgend nur auf die zur Fig. 1 vorhandenen konstruktiven Unterschiede eingegangen.

Man erkennt bei der Ausgestaltungsform gemäß der Fig. 2, dass kein Trennelement vorhanden ist, so dass zwischen dem Absorptionsabschnitt 20 des Eintrittsrohrs 12 und der diesen Absorptionsabschnitt 20 umgebenden Ummantelung 24 ein einziger in radialer Richtung - bezogen auf die Achse L - nicht unterteilter Absorptionsraum 28' gebildet wird, der mit Absorptionsmaterial 40' gefüllt ist. Weiterhin erkennt man, dass die Öffnungen 46 im Absorptionsabschnitt 20 und die Öffnungen 50 in der Ummantelung 24 im Wesentlichen über die gesamte einander überdeckende Länge dieser beiden Bauteile 20, 24 verteilt sind, was letztendlich bedeutet, dass die diese Öffnungen 46, 50 aufweisenden Abschnitte des Absorptionsabschnitts 20 einerseits und der Ummantelung 24 andererseits einander in der Strömungsrichtung R überlappen bzw. im dargestellten Beispiel entsprechen. Weiterhin erkennt man, dass bei dieser Ausgestaltungsform zumindest in dem am Endbereich 32 vorgesehenen und den Absorptionsraum 28' dort abschließenden Abschlusselement 36 ebenfalls zum Absorptionsraum 28' hin offene Öffnungen 66 ausgebildet sind.

Derartige Öffnungen könnten selbstverständlich auch an dem anderen Abschlusselement 38 vorgesehen sein und könnten selbstverständlich auch bei der vorangehend beschriebenen Ausgestaltungsform vorhanden sein.

Durch den in Fig. 2 gezeigten Aufbau wird insbesondere aufgrund des Überlapps der Öffnungen 46 und 50 bzw. der diese aufweisenden Abschnitte der Interferenzeffekt zur Schallemissionsminderung verstärkt genutzt.

Hinsichtlich des in den verschiedenen Absorptionsräumen 28, 30 bzw. 28' vorzusehenden Absorptionsmaterials 40, 42 bzw. 40' sei ausgeführt, dass hier jedes zur Schallabsorption beitragende und vor allem auch hinsichtlich der in diesem Bereich auftretenden hohen Temperaturen resistente Material eingesetzt werden kann. Dies betrifft sowohl beispielsweise auch aus Metallmaterial aufgebaute Geflechte, Gespinste, oder sonstige faserartigen Materialien, wie z.B. Glasfasermaterialien, als auch poröse Festkörpermaterialien.

Es ist selbstverständlich, dass bei dem vorangehend beschriebenen Schalldämpfer die Strömungsrichtung bezüglich der beschriebenen Richtung umgekehrt werden kann, d.h., dass das den Schalldämpfer durchströmende Medium zunächst den Zwischenraum zwischen dem Gehäuse 14 und der Ummantelung 24 durchströmt, dann in den Absorptionsabschnitt 20 eintritt und diesen über den Stutzen 16 verlässt. Weiterhin ist es selbstverständlich möglich, dass der vorangehend beschriebene Schalldämpfer nicht nur als Abgasschalldämpfer eingesetzt werden kann, sondern dass dieser ebenso als Verbrennungsluftschalldämpfer eingesetzt werden kann, also als Schalldämpfer der vor einem Heizgerät oder einem sonstigen Brennstoff zusammen mit Luft verbrennenden Gerät angeordnet ist. Auch dabei können insbesondere im Bereich eines Verbrennungsluftgebläses erzeugte Geräusche gedämpft werden.

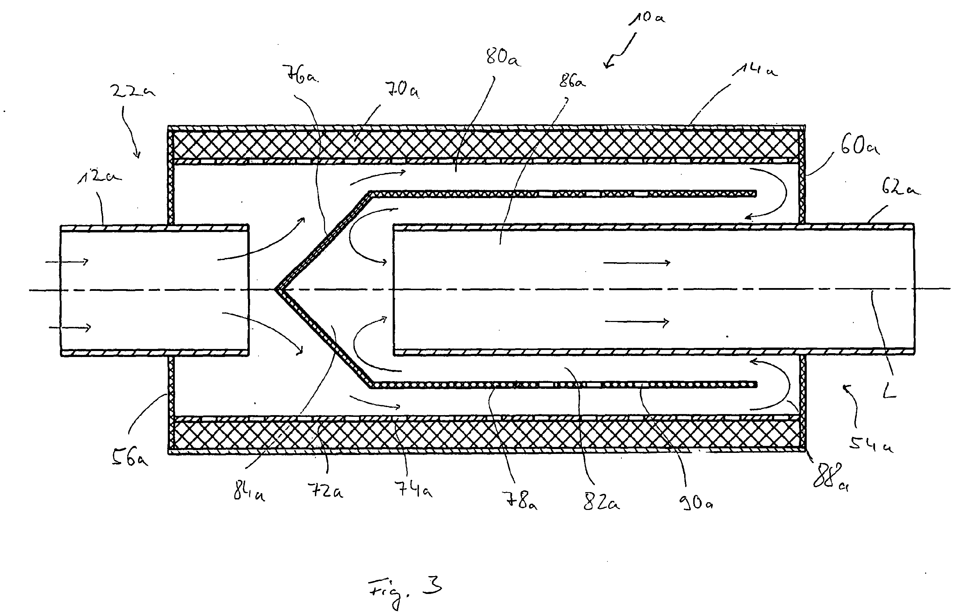

Eine weitere Ausgestaltungsform eines erfindungsgemäßen Schalldämpfers ist in Fig. 3 gezeigt. Hier sind Komponenten, welche hinsichtlich Aufbau bzw. Funktion vorangehend bereits beschriebenen Komponenten entsprechen, mit dem gleichen Bezugszeichen unter Hinzufügung eines Anhangs "a" bezeichnet.

Bei dem in Fig. 3 gezeigten Schalldämpfer 10a ist das vorzugsweise im Wesentlichen zentrisch zu einer Längsmittelachse L des Schalldämpfers 10a vorgesehene Eintrittsrohr 12a am Bodenbereich 56a vorgesehen. Das Eintrittsrohr 12a ist im Wesentlichen als vergleichsweise kurzer Rohrstutzen ausgebildet und bildet somit am Eintrittsende 22a den Eintrittsbereich des Schalldämpfers 10a.

Am gegenüber liegenden Bodenbereich 60a ist vorzugsweise ebenfalls zentrisch zur Längsmittelachse L ein Austrittsrohr 62a vorgesehen, das sich, ebenso wie das Eintrittsrohr 12a, vorzugsweise zur Verbindung mit anderen Rohrabschnitten mit einem Längenabschnitt außerhalb des zwischen den beiden Bodenbereichen 56a, 60a liegenden Volumenbereichs erstreckt, das sich jedoch deutlich weiter in diesen Volumenbereich hineinerstreckt, als das Eintrittsrohr 12a. Das Austrittsrohr 62a ist in einem Großteil seines in dem von dem Gehäuse 14a umgebenen Volumenbereich liegenden Abschnitts durch ein einseitig durch einen weiteren Bodenbereich 76a abgeschlossenes, rohrartiges Strömungsführungselement 78a umgeben. Der Bodenbereich 76a liegt dabei im zwischen den beiden Rohren 12a, 62a liegenden Abschnitt und ist zum Eintrittsrohr 12a aus Gründen der verbesserten Strömungsführung sich verjüngend ausgebildet.

Es liegt somit eine Konfiguration vor, bei welcher zwischen der im Wesentlichen das Schallabsorptionsmaterial 70a und die dieses Material zur Innenseite hin abdeckenden Auskleidung 72a umfassenden Schallabsorptionsmaterialanordnung und dem Strömungsführungselement 78a ein erster Strömungsraumbereich 80a gebildet ist, welcher vom Eintrittsende 22a bzw. vom Eintrittsrohr 12a in Richtung zum Austrittsende 54a führt, das in der dargestellten Ausgestaltungsform auch ein Umlenkende bildet. Zwischen dem Strömungsführungselement 78a und dem Austrittsrohr 62a ist ein zweiter Strömungsraumbereich 82a gebildet, der vom Umlenkende 54a bzw. Austrittsende 54a wieder weg in Richtung zum Eintrittsende 22a führt zu einem im Wesentlichen durch den Bodenbereich 76a gebildeten Umlenkbereich 84a. Ein dritter Strömungsraumbereich 86a ist innerhalb des Austrittsrohrs 62a gebildet.

Die durch das Eintrittsrohr 12a in das Gehäuse 14a eingeleiteten Gase strömen somit nach der Umlenkung am Bodenbereich 76a nach radial außen durch den ersten Strömungsraumbereich 80a hindurch zu dem am Umlenkende bzw. Austrittsende 54a gebildeten Umlenkbereich 88a. Dort findet eine Strömungsumlenkung in den zweiten Strömungsraumbereich 82a statt, in welchem die Gase in Richtung zum Umlenkbereich 84a strömen. Nach Umlenkung in diesem zweiten Umlenkbereich 84a strömen die Gase durch den dritten Strömungsraumbereich 86a bzw. das Austrittsrohr 62a wieder in Richtung zum Austrittsende 54a, wo sie nunmehr den Schalldämpfer 10a verlassen.

Auch bei dem in Fig. 3 dargestellten Schalldämpfer 10a findet also eine Kombination der verschiedenen Schalldämpfungsmechanismen Absorption, Reflexion und Interferenz statt. Insbesondere die zweimalige Umlenkung der geführten Gase und die entsprechende Schallreflexion an den beiden Umlenkbereichen 88a, 84a erhöht den Effekt der Dämpfung durch Reflexion, wobei auch hier eine sehr kompakte Bauweise dadurch erlangt werden kann, dass der Raumbereich, in welchem die Reflexionsdämpfung stattfindet, umgeben ist durch Absorptionsmaterial. Der Aspekt der Reflexion kann beispielsweise dadurch noch verbessert werden, dass in dem Strömungsführungselement 78a Öffnungen 90a vorgesehen sind, die eine direkte Verbindung zwischen dem ersten Strömungsraumbereich 80a und dem zweiten Strömungsraumbereich 82a herstellen.

Es ist selbstverständlich möglich, bei der in Fig. 3 dargestellten Ausgestaltungsform an dem Strömungsführungselement 78a oder dem Austrittsrohr 62a eine Schallabsorptionsmaterialanordnung vorzusehen, wie beispielsweise in den Figuren 1 und 2 gezeigt. D.h., auch diese Bauteile könnten doppelwandig oder mehrwandig ausgebildet sein und jeweilige Absorptionsraumbereiche bilden, in welchen dann Schallabsorptionsmaterial vorgesehen sein kann.

Wie bereits vorangehend ausgeführt, ist bei dieser Ausgestaltungsform ein besonders vorteilhafter Aspekt, dass die drei durch zweimalige Strömungsumlenkung gebildeten Strömungsraumbereiche ineinander geschachtelt sind, d.h. beispielsweise koaxial zueinander angeordnet sind, so dass eine sehr kompakte Bauweise erhalten werden kann.

Es ist selbstverständlich, dass auch bei dieser Ausgestaltungsform die Strömungsrichtung umgekehrt werden kann, so dass im Wesentlichen das Eintrittsende 22a und das Austrittsende 54a vertauscht werden und das Austrittsrohr 62a das Eintrittsrohr bildet, während das Eintrittsrohr 12a dann das Austrittsrohr bildet.

Durch die vorliegende Erfindung wird ein Schalldämpfer für ein Heizgerät bereitgestellt, der aufgrund der Ineinanderschachtelung mehrerer rohrartiger Abschnitte nicht nur einen sehr kompakten Aufbau, sondern auch eine hervorragende Schallabsorptionscharakteristik aufweist. Das Vorsehen von Einlassbereich und Auslassbereich an der gleichen Endseite eines Gehäuses sorgt weiterhin für eine den zur Verfügung stehenden Bauraum in einem Fahrzeug sehr effizient ausnutzende Ausgestaltung.

## Patentansprüche

1. Schalldämpfer für ein Heizgerät, insbesondere Fahrzeugheizgerät, umfassend einen rohrartigen Eintrittsbereich (16, 18, 20), eine den rohrartigen Eintrittsbereich (20) wenigstens bereichsweise umgebende Schallabsorptionsmaterialanordnung (40, 26, 42; 40'), eine die Schallabsorptionsmaterialanordnung (40, 26, 42; 40') umgebende rohrartige Ummantelung (24), wobei in dem rohrartigen Eintrittsbereich (16, 18, 20) und in der rohrartigen Ummantelung jeweils zur Schallabsorptionsmaterialanordnung (40, 26, 42; 40') hin offene Öffnungen vorgesehen sind,
**gekennzeichnet durch** eine Gehäuseanordnung (14), welche die Ummantelung (24) zum Bilden eines Verbrennungsabgasrückströmungsraumes (58) umgibt und in welche in einem Eintrittsende (22) Verbrennungsabgase über den Eintrittsbereich (16, 18, 20) eingeleitet werden, **durch** den Eintrittsbereich (16, 18, 20) hindurch in Richtung zu einem Umlenkbereich (54, 56) geleitet werden, an welchem die Verbrennungsabgase zum Zurückströmen **durch** den Verbrennungsabgasrückströmungsraum (58) umgelenkt werden.

2. Schalldämpfer für ein Heizgerät nach Anspruch 1,
**dadurch gekennzeichnet, dass** die Öffnungen (46) in dem Eintrittsbereich (16, 18, 20) und die Öffnungen (50) in der Ummantelung (24) wenigstens zum Teil in in einer Strömungsrichtung (R) zueinander versetzten Abschnitten (44, 48) des Eintrittsbereichs (16, 18, 20) und der Ummantelung (24) vorgesehen sind.

3. Schalldämpfer für ein Heizgerät nach Anspruch 1 oder 2,
**dadurch gekennzeichnet, dass** die Öffnungen (46) in dem Eintrittsbereich (16, 18, 20) und die Öffnungen (50) in der Ummantelung (24) wenigstens zum Teil in in einer Strömungsrichtung (R) einander überlappenden Abschnitten des Eintrittsbereichs (16, 18, 20) und der Ummantelung (24) vorgesehen sind.

4. Schalldämpfer für ein Heizgerät nach einem der Ansprüche 1 bis 3,
**dadurch gekennzeichnet, dass** die Absorptionsmaterialanordnung (40, 26, 42) ein rohrartiges Trennelement (26) umfasst und dass in einem zwischen dem Trennelement (26) und dem Eintrittsbereich (16, 18, 20) gebildeten ersten Absorptionsraum (28) und in einem zwischen dem Trennelement (26) und der Ummantelung (24) gebildeten zweiten Absorptionsraum (30) Absorptionsmaterial (40, 42) angeordnet ist.

5. Schalldämpfer für ein Heizgerät nach Anspruch 4,
**dadurch gekennzeichnet, dass** der erste Absorptionsraum (28) oder/und der zweite Absorptionsraum (30) an wenigstens einem Endbereich (32, 34) abgeschlossen ist.

6. Schalldämpfer für ein Heizgerät nach einem der Ansprüche 1 bis 5,
**dadurch gekennzeichnet, dass** die Verbrennungsabgase in Richtung zu einem Abgasaustritt (62) umgelenkt werden und dass der Abgasaustritt (62) am Eintrittsende (22) der Gehäuseanordnung (14) vorgesehen ist.

7. Schalldämpfer für ein Heizgerät, insbesondere Fahrzeugheizgerät, umfassend eine wenigstens bereichsweise mit einer Schallabsorptionsmaterialanordnung (70a, 72a) ausgekleidete Gehäuseanordnung (14a) mit einem Eintrittsbereich (12a) an einem Eintrittsende (22a) und einem Austrittsbereich (62a) an einem Austrittsende (54a), einen ersten Strömungsraumbereich (80a), welcher vom Eintrittsbereich (12a) zu einem ersten Umlenkbereich (88a) führt, in welchem eine Strömungsumlenkung in einen zweiten Strömungsraumbereich (82a) erfolgt, wobei der zweite Strömungsraumbereich in Richtung zum Eintrittsende (22a) zurück zu einem zweiten Umlenkbereich (84a) führt, wobei im zweiten Umlenkbereich (84a) eine Strömungsumlenkung in einen dritten Strömungsraumbereich (86a) erfolgt, welcher in Richtung zum Austrittsende (54a) führt, wobei
der erste Strömungsraumbereich (80a), der zweite Strömungsraumbereich (82a) und der dritte Strömungsraumbereich (86a) ineinander geschachtelt sind und
der erste und der zweite Strömungsraumbereich (80a, 82a) und der zweite und der dritte Strömungsraumbereich (82a, 86a) durch ein jeweiliges Strömungsführungselement (78a, 62a) voneinander getrennt sind,
**dadurch gekennzeichnet, dass** in wenigstens einem der Strömungsführungselemente (78a, 62a) Öffnungen (90a) vorgesehen sind
dass eine die Gehäuseanordnung (14) wenigstens teilweise auskleidende Schallabsorbtionsmaterialanordnung (70a) vorgesehen ist.

8. Schalldämpfer nach Anspruch 7,
**dadurch gekennzeichnet, dass** wenigstens eines der Strömungsführungselemente (78a, 62a) eine Schallabsorptionsmaterialanordnung aufweist.

9. Schalldämpfer nach einem der Ansprüche 7 bis 8,
**dadurch gekennzeichnet, dass** die die Gehäuseanordnung (14) wenigstens teilweise auskleidende Schallabsorbtionsmaterialanordnung (70a) durch ein Trennelement (72a) bedecktes Schallabsorptionsmaterial (70a) umfasst.

10. Schalldämpfer nach Anspruch 9,
**dadurch gekennzeichnet, dass** in dem Trennelement (72a) zum Schallabsorptionsmaterial (70a) hin offene Öffnungen (74a) vorgesehen sind.

## Claims

1. Silencer for a heating device, in particular a vehicle heating device, comprising a tube-like entry section (16, 18, 20), a sound absorption material arrangement (40, 26, 42; 40') at least partially surrounding the tube-like entry section (20), a tube-like sheath (24) surrounding the sound absorption material arrangement (40, 26, 42; 40'), apertures being provided in the tube-like entry section (16, 18, 20) and in the tube-like sheath which are each open towards the sound absorption material assembly (40, 26, 42; 40'),
**characterized by** a casing arrangement (14) surrounding the sheath (24) for forming a combustion gas reflux space (58) and to which at an entry end (22) combustion gases may be inserted via the entry section (16, 18, 20) and may be conducted through the entry section (16, 18, 20) towards a redirecting section (54, 56), in which the combustion gases are redirected for flowing back through the combustion gas reflux space (58).

2. Silencer for a heating device according to claim 1,
**characterized in** the apertures (46) in the entry section (16, 18, 20) and the apertures (50) in the sheath (24) being at least partially provided in parts (44, 48) of the entry section (16, 18, 20) and in the sheath (24), which are mutually offset in a flow direction (R).

3. Silencer for a heating device according to claim 1 or 2,
**characterized in** the apertures (46) in the entry section (16, 18, 20) and the apertures (50) in the sheath (24) being at least partially provided in parts of the entry section (16, 18, 20) and in the sheath (24), which are overlapping in a flow direction (R).

4. Silencer for a heating device according to one of claims 1 to 3,
**characterized in** the absorption material arrangement (40, 26, 42) comprising a tube-like separating element (26) and in absorption material (40, 42) being located in a first absorption space (28) formed between the separating element (26) and the entry section (16, 18, 20) and in a second absorption space (30) formed between the separating element (26) and the sheath (24).

5. Silencer for a heating device according to claim 4,
**characterized in** the first absorption space (28) or/and the second absorption space (30) being sealed off at at least one end section (32, 34).

6. Silencer for a heating device according to one of claims 1 to 5,
**characterized in** the combustion gases being redirected towards an exhaust gas exit (62) and in the exhaust gas exit (62) being provided at the entry end (22) of the casing arrangement (14).

7. Silencer for a heating device, in particular a vehicle heating device, comprising a casing arrangement (14a), lined at least partially with a sound absorption material arrangement (70a, 72a), and having an entry section (12a) at an entry end (22a) and an exit section (62a) at an exit end (54a), a first flow space section (80a), leading from the entry section (12a) to a first redirecting section (88a), in which a flow redirection towards a second flow space section (82a) is carried out, the second flow space section leading towards the entry end (22a) back to a second redirecting section (84a), a flow redirection towards a third flow space section (86a) taking place in the second redirecting section (84a), leading towards the exit end (54a),
the first flow space section (80a), the second flow space section (82a) and the third flow space section (86a) being nested, and
the first and the second flow space sections (80a, 82a) and the second and the third flow space sections (82a, 86a) being separated by a respective flow directing element (78a, 62a),
**characterized in** apertures (90a) being provided in at least one of the flow directing elements (78a, 62a) and in
a sound absorption material arrangement (70a) being provided which is at least partially lining the casing arrangement (14).

8. Silencer according to claim 7,
**characterized in** at least one of the flow directing elements (78a, 62a) comprising a sound absorption material arrangement.

9. Silencer according to one of claims 7 to 8,
**characterized in** the sound absorption material arrangement (70a) which is at least partially lining the casing arrangement (14) comprising sound absorption material (70a) which is covered by a separating element (72a).

10. Silencer according to claim 9,
**characterized in** apertures (74a) being provided in the separating element (72a) which are open towards the sound absorption material (70a).

## Revendications

1. Silencieux pour un dispositif de chauffage, en particulier pour un dispositif de chauffage de véhicule, comprenant une section d'entrée tubulaire (16, 18, 20), un arrangement de matériel d'absorption phonique (40, 26, 42; 40') enrobant au moins partiellement la section d'entrée tubulaire (20), une gaine tubulaire (24) enrobant le matériel d'absorption phonique (40, 26, 42; 40'), avec des ouvertures prévues dans la section d'entrée tubulaire (16, 18, 20) ainsi que dans la gaine tubulaire, qui sont respectivement ouvertes vers l'arrangement de matériel d'absorption phonique (40, 26, 42; 40'),
**caractérisé par** un arrangement de boîtier (14), enrobant la gaine (24) pour former un espace de reflux de gas de combustion (58), et dans lequel des gas de combustion sont introduits à une extrémité d'entrée (22) par la section d'entrée (16, 18, 20) et sont conduits à travers la section d'entrée (16, 18, 20) vers une section de redirection (54, 56), où les gas de combustion sont redirigés pour refluer à travers l'espace de reflux de gas de combustion (58).

2. Silencieux pour un dispositif de chauffage selon la revendication 1,
**caractérisé en ce que** les ouvertures (46) dans la section d'entrée (16, 18, 20) et les ouvertures (50) dans la gaine (24) sont prévues au moins partiellement dans des parties (44, 48) de la section d'entrée (16, 18, 20) ainsi que dans la gaine (24), décalées mutuellement en direction du courant (R).

3. Silencieux pour un dispositif de chauffage selon la revendication 1 ou 2,
**caractérisé en ce que** les ouvertures (46) dans la section d'entrée (16, 18, 20) et les ouvertures (50) dans la gaine (24) sont prévues au moins partiellement dans des parties de la section d'entrée (16, 18, 20) ainsi que dans la gaine (24), entrelacées en direction du courant (R).

4. Silencieux pour un dispositif de chauffage selon une des revendications 1 à 3,
**caractérisé en ce que** l'arrangement de matériel d'absorption (40, 26, 42) comprend un élément séparateur tubulaire (26) et que du matériel d'absorption (40, 42) est arrangé dans un premier espace d'absorption (28) formé entre l'élément séparateur (26) et la section d'entrée (16, 18, 20) et dans un deuxième espace d'absorption (30) formé entre l'élément séparateur (26) et la gaine (24).

5. Silencieux pour un dispositif de chauffage selon la revendication 4,
**caractérisé en ce que** le premier espace d'absorption (28) ou/et le deuxième espace d'absorption (30) sont fermés à au moins une section terminale (32, 34).

6. Silencieux pour un dispositif de chauffage selon une des revendications 1 à 5,
**caractérisé en ce que** les gas de combustions sont redirigés vers une sortie de gas d'échappement (62) et que la sortie de gas d'échappement (62) est prévue à une extrémité d'entrée (22) de l'arrangement de boîtier (14).

7. Silencieux pour un dispositif de chauffage, en particulier pour un dispositif de chauffage de véhicule, comprenant un arrangement de boîtier (14a), au moins partiellement couvert par un arrangement de matériel d'absorption phonique (70a, 72a), ayant une section d'entrée (12a) à une extrémité d'entrée (22a), et avec une section de sortie (62a) à une extrémité de sortie (54a), une première section d'espace de courant (80a) menant de la section d'entrée (12a) à une première section de redirection (88a), dans laquelle le courant est redirigé vers une deuxième section d'espace de courant (82a), la deuxième section d'espace de courant menant vers la section d'entrée (22a) en arrière à une deuxième section de redirection (84a), une redirection du courant vers la troisième section d'espace de courant (86a) ayant lieu dans la deuxième section de redirection (84a), menant vers l'extrémité de sortie (54a),
la première section d'espace de courant (80a), la deuxième section d'espace de courant (82a) et la troisième section d'espace de courant (86a) étant enfilée l'une dans l'autre, et
la première et la deuxième section d'espace de courant (80a, 82a) ainsi que la deuxième et la troisième section d'espace de courant (82a, 86a) étant séparées l'une de l'autre par des éléments de guidage de courant (78a, 62a) respectifs,
**caractérisé en ce que** des ouvertures (90a) sont prévues dans au moins un des éléments de guidage de courant (78a, 62a) et
**en ce qu'**un arrangement de matériel d'absorption phonique (70a) est prévu recouvrant au moins partiellement l'arrangement de boîtier (14).

8. Silencieux selon la revendication 7,
**caractérisé en ce qu'**au moins un des éléments de guidage de courant (78a, 62a) comprend un arrangement de matériel d'absorption phonique.

9. Silencieux selon une des revendications 7 à 8,
**caractérisé en ce que** l'arrangement de matériel d'absorption phonique (70a) recouvrant au moins partiellement l'arrangement de boîtier (14) comprend du matériel d'absorption phonique (70a) recouvert par un élément séparateur (72a).

10. Silencieux selon la revendication 9,
**caractérisé en ce que** des ouvertures (74a) sont prévues dans l'élément séparateur (72a) qui sont ouvertes vers le matériel d'absorption phonique (70a).
